# EUROPEAN PATENT SPECIFICATION

(11) **EP 4 575 808 B1**
(45) Date of publication and mention of the grant of the patent: **10.06.2026**
(21) Application number: 24219545.1
(22) Date of filing: 12.12.2024
(51) Int. Cl.: G06F 12/0817, G06F 12/0831

(54) **MANAGEMENT OF MULTIPLE CACHE LINE INVALIDATIONS**
VERWALTUNG VON MEHRFACH-CACHEZEILEN-INVALIDIERUNGEN
GESTION D'INVALIDATIONS DE LIGNES DE CACHE MULTIPLES

(30) Priority: 22.12.2023 FR 2315090
(43) Date of publication of application: 25.06.2025
(73) Proprietor: Kalray, 38330 Montbonnot-Saint-Martin (FR)
(72) Inventor: RAY, Vincent, 38580 ALLEVARD (FR)
(74) Representative: de Jong, Jean Jacques

(56) References cited:
- US-A1- 2019 266 092
- US-B2- 6 701 417

## Description

### Technical Field

The invention relates to cache coherence management in a multicore processor system where the cores can simultaneously access different banks forming a shared memory.

### Background

There are several cache coherence protocols designed to ensure, in a multicore system, that the local cache of each processor core reflects the data updated in shared memory by other cores.

A commonly used operation in coherence protocols is the invalidation of cache lines. At a given time, there may be duplication of the same memory block, or cache line, in different local caches. If a core writes to memory at an address corresponding to this cache line, the copies in the other cores become obsolete.

To account for this, when a core writes to memory, the cache coherence protocol sends an invalidation command to the other cores possessing the corresponding cache line. This invalidation command instructs the local cache controllers to invalidate their local copies. A core accessing a cache line thus invalidated in its local cache will need to load the updated line again from memory.

To manage the sending of invalidation commands, the coherence protocol can be based on a directory where the memory controller records the cache lines used and the cores that have them in their caches.

When the shared memory is structured in multiple banks simultaneously accessible by all cores, each bank is likely to send a simultaneous invalidation command to the involved cores. Thus, a given core may receive multiple simultaneous invalidation commands. The processing of these multiple commands by the cache controller may result in a latency of several cycles during which the memory banks that sent these invalidation commands cannot normally acknowledge the write accesses that triggered these sends.

To avoid such latency, techniques have been proposed that allow the cache controller to process multiple invalidation commands simultaneously. An example of such a technique is described in US Patent 6,701,417, which uses a directory-based protocol and write-through caches. More specifically, this patent proposes to partition the local cache into multiple banks, each of which is designed to handle a respective invalidation command. Thus, the cache controller can simultaneously process at most as many invalidation commands as there are banks.

### Summary

A method is generally provided for managing cache coherence in a multicore processor system, wherein each core has a respective cache and accesses multiple banks of a memory shared between the cores, the method comprising the steps of managing a directory in each memory bank for implementing a directory-based cache coherence; writing to a current memory address by a core; searching the directory assigned to the current memory address for cores that possess a cache line matching the current memory address; sending respective cache line invalidation commands to the cores returned by the directory, the commands including the memory address of the cache line; and for each core, serving multiple invalidation commands received from different memory banks. The step of serving multiple invalidation commands comprises the steps of counting the number of invalidation commands received since a last clock cycle; when the count of invalidation commands received is one, transmitting the received invalidation command to the cache; and when the count of invalidation commands received is greater than one, transmitting to the cache a single command consolidating the cache lines identified in the received invalidation commands, in a format usable by the cache to simultaneously invalidate the identified cache lines.

Each core may have a respective set-associative multi-way cache, the method then further comprising the steps of recording in the directories the ways in which the caches store the cache lines; transmitting the ways in the invalidation commands sent to the cores; and including in the consolidated invalidation command, for each received invalidation command, a pair of coordinates including a set index, extracted from the memory address, and the way.

The method may comprise the step of responding to the consolidated invalidation command by the cache by simultaneously invalidating each cache line located at the intersection of the set and way determined by a respective pair of coordinates.

The step of serving multiple invalidation commands may comprise the steps of forming a bit mask comprising bits set to 1 at the positions identified by set indices extracted from the memory addresses of the received invalidation commands; when the count of invalidation commands received is greater than a threshold, including the bit mask in the consolidated invalidation command; and responding to the consolidated command by the cache by simultaneously invalidating the cache sets marked in the bit mask.

The directory may record the cores and ways for each cache line in the form of a compound bit mask marking the cores having the line in their cache and the ways in which the line is present in the caches of those cores, and the way information transmitted in the invalidation commands may include the bits of the compound bit mask identifying the ways.

The consolidated invalidation commands may be configured to convey a field comprising a fixed number of bits, among which: a first part identifies a command type among an original invalidation command, a consolidated command with coordinates, and a consolidated command with a bit mask, and a second part defines for the respective types: the address of the cache line, the pairs of coordinates, and the bit mask.

A processor is generally provided, comprising multiple cores, each including a local cache; multiple memory banks forming a shared memory for the multiple cores; a directory-based cache coherence protocol manager, comprising for each core a circuit for consolidating multiple cache line invalidation commands received from the different memory banks. The consolidation circuit comprises a counter for counting the received invalidation commands; and a selection circuit configured to, depending on whether the count of received invalidation commands is equal to 1 or greater, transmit to the cache the single received invalidation command or a consolidated invalidation command for the cache lines identified in the received invalidation commands, in a format usable by the cache to simultaneously invalidate the identified cache lines.

Each core may have a respective set-associative multi-way cache, the processor further comprising a directory associated with each memory bank, configured to record with each cache line, the ways in which the cache line is present in the different cores and to include the ways in the invalidation commands sent to the cores; and the consolidation circuit configured to include in the consolidated invalidation command, for each received cache line invalidation command, a pair of coordinates including a set index, extracted from a memory address of the cache line, and the way.

The consolidation circuit may be configured to include in the consolidated invalidation command, when the count of received invalidation commands is greater than a threshold, a bit mask marking cache sets to invalidate, wherein each set includes the cache line identified by a respective received invalidation command.

An alternative method may be provided for managing cache coherence in a multicore processor system, wherein each core has a respective set-associative multi-way cache, and accesses multiple banks of a memory shared between the cores, the method comprising the steps of managing a directory in each memory bank for implementing a directory-based cache coherence; writing to a current memory address by a core; searching the directory assigned to the current memory address for the cores that possess a cache line matching the current memory address; sending respective cache line invalidation commands to the cores returned by the directory, the commands including the memory address of the cache line; for each core, serving multiple invalidation commands received from different memory banks; recording in the directories the ways in which the caches store the cache lines; transmitting the ways in the invalidation commands sent to the cores; serving the multiple invalidation commands received by a core by transmitting to the core's cache a single consolidated command including, for each received invalidation command, a pair of coordinates including a set index, extracted from the memory address of the cache line, and the way; and responding by a cache to a consolidated invalidation command by simultaneously invalidating each cache line located at the intersection of the set and way determined by a respective pair of coordinates.

The step of serving multiple invalidation commands may comprise the steps of counting the number of invalidation commands received since a last clock cycle; forming a bit mask comprising bits set to 1 at the positions identified by the set indices; when the count of received invalidation commands is greater than a threshold, including the bit mask in the consolidated invalidation command in place of the pairs of coordinates; and responding by the cache to the consolidated command by simultaneously invalidating the cache sets marked in the bit mask.

### Brief Description of the Drawings

Embodiments will be set forth in the following non-limiting description in relation to the accompanying drawings, among which:
Figure 1 partially represents an embodiment of a multicore processor architecture configured to implement a directory-based cache coherence protocol;
Figure 2A represents three types of consolidated invalidation commands, according to an embodiment, allowing a cache controller to simultaneously invalidate multiple cache lines;
Figure 2B represents an example of a record in a directory used for a cache coherence protocol; and
Figure 3 is a block diagram of a logic circuit configured to generate the consolidated commands of Figure 2A.

### Detailed Description

The cache coherence protocol described in US Patent 6,701,417 requires a specific cache structure and the number of invalidation commands that can be processed simultaneously is limited to the number of banks in the cache, in practice four.

A cache coherence protocol is disclosed below with which the cache controller can simultaneously process all invalidation commands that are likely to arrive, at the cost of a performance trade-off from a threshold number of commands processed simultaneously. In the worst case, the trade-off is, for a set-associative multi-way cache, the coarse invalidation of an entire set of cache lines, instead of invalidating a single cache line.

The notion of simultaneous processing of multiple invalidation commands is relative to a clock cycle of the cores. In practice, the processing is performed asynchronously by combinatorial logic circuits that produce the desired operations with more or less delay depending on the situation, but which remains less than a clock period.

Moreover, the protocol is adaptive by operating a selection between several modes depending on the number of invalidation commands to be processed. In the first mode, selected for a single command to be processed, a conventional, precise invalidation command may be used, allowing to identify the involved cache line and to invalidate it only if it is still present in the cache, namely listed in the cache tag memory.

In a coarse mode, which may be selected for any number of commands to be processed, a consolidated command is produced that simultaneously invalidates the sets containing the involved cache lines.

An intermediate, finer mode is preferably used up to a certain threshold of number of commands to be processed, producing a consolidated invalidation command that identifies each cache line by a pair of coordinates (set containing the line, way containing the line). The cache controller then simultaneously invalidates all the lines identified by these pairs of coordinates. The presence of these lines in the cache is then not checked, which is a small price to pay for the possibility of simultaneously processing these multiple invalidation commands. In practice, the invalidation of an absent cache line causes the invalidation of a memory location intended to contain a cache line. This location may be empty, in which case it is already invalid and the operation has no effect. The location may also contain a new cache line, in which case this new line is invalidated for nothing, but this simply results in a subsequent latency to reload the line when the core attempts to access it.

The number of invalidations that can be processed in this mode depends on the size of a parameter of the consolidated command, which size conditions the number of pairs of coordinates that can be conveyed.

The efficiency of this protocol, in terms of granularity in the selection of cache lines to invalidate, is related to the frequency of cases where bursts of multiple simultaneous invalidation commands occur, and the number of commands to be processed in each burst. It turns out in practice that cases where only one invalidation command is to be processed are more frequent than bursts of several commands. Moreover, bursts with a small number of commands (for example between 2 and 4) are more frequent than those with a larger number of commands.

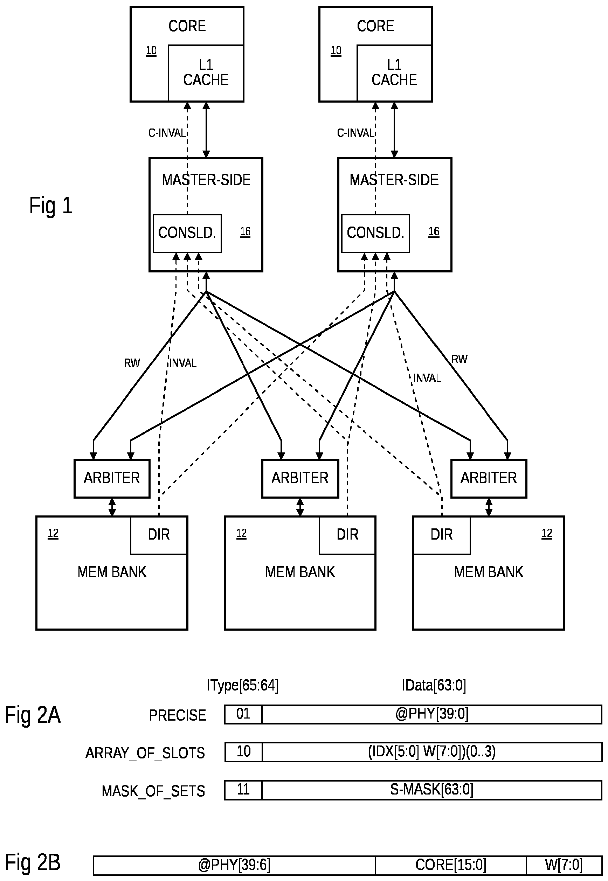

Figure 1 partially represents a multicore processor architecture usable for implementing such a directory-based cache coherence protocol. Two processor cores 10 have simultaneous read and write RW access to multiple banks 12 (of which only three are represented) of a shared memory through a crossbar switch managed by arbiters ARBITER. Each core includes a level 1 local cache L1.

Cache coherence is managed by a directory DIR that may be centralized or distributed, as shown, in each memory bank 12. The directories are configured to record the cache lines currently in use in each core. Each directory DIR associated with a bank only lists the cache lines corresponding to the physical addresses assigned to the bank. The directories communicate with the cores via respective "master-sides" 16, which may be part of the L1 caches or the crossbar switch. The master sides are connected to the directories DIR by point-to-point signaling links, represented by dashed lines.

In a conventional manner, a directory receives a new record each time a core misses a read in its cache and retrieves the cache line in the corresponding bank. The new record identifies the cache line and the core. A record is kept in the directory until that cache line is invalidated. Thus, directory information may be obsolete in between.

Directory records are typically stored in an associative memory indexed by the physical addresses of the cache lines.

When a given core writes to a memory line subject to coherence, this event is signaled to the directories. The directory that is responsible for managing the coherence of this address then issues an invalidation INVAL to the other cores registered as possessing this cache line.

In order to manage multiple invalidations simultaneously according to the previously mentioned adaptive mode, each master side includes a consolidation circuit CONSLD receiving individual invalidation commands from all directories. From the individual invalidation commands, this circuit produces a consolidated invalidation command C-INVAL to the corresponding L1 cache memory.

As previously indicated, the consolidated command may be of two, or preferably three types: PRECISE, ARRAY_OF_SLOTS, and MASK_OF_SETS.

Figure 2A illustrates an example of formats for the three types of consolidated commands, assuming for example that physical memory addresses are 40 bits and the cache is a set-associative cache with 64 sets of 8 ways whose lines are 64 bytes long (ie a 32 kB cache).

Each consolidated command comprises two type identifier bits IType[65:64] followed by a 64-bit field IData[63:0] whose function depends on the type. A binary identifier "00" indicates that there is no invalidation to be processed.

The binary identifier 01 corresponds to the PRECISE type. This consolidated command is produced when only one invalidation command is pending from the last clock cycle. It provides in its IData field what is normally provided by the single incoming invalidation command, namely the physical address @PHY[39:0] used for the memory access. In principle, a certain number of least significant bits of the physical address, called the offset and defining the position of the data in a cache line, are not useful, so that 6 least significant bits can be removed here and only @PHY[39:6] may be used. In the thus truncated address, the 6 least significant bits [11:6] constitute what is called the index, and serve to identify the set containing the cache line. The remaining significant bits [39:12] are what is called the tag, with which the cache tag memory is consulted, which identifies amongst others the way containing the cache line. If the tag memory does not provide a corresponding value, it is because the cache line has been evicted after the directory issued the invalidation command.

A PRECISE consolidated command is processed by the cache controller like a conventional invalidation command, invalidating the unequivocally identified cache line.

The binary identifier "10" corresponds to the ARRAY _OF _SLOTS type. This consolidated command is produced when two or more invalidation commands are received simultaneously in the same clock cycle. The number of commands that can be processed simultaneously is limited by the size of the IData field, here 64 bits. This IData field conveys in this example four 14-bit data items used to identify four cache lines to invalidate. The 56 bits corresponding to these data items may be right-aligned in the IData field. Each 14-bit data item corresponds to a pair of coordinates, namely in this example a 6-bit index IDX[5:0] and an 8-bit way W[7:0]. The cache line to invalidate is therefore located at the intersection of the set identified by the index IDX and the way identified by the field W.

For reasons discussed later, the W field is in this example an 8-bit mask, identifying one to eight ways by the positions of bits at 1. According to an alternative, the way number may be encoded on 3 bits, in which case the IData field could contain 7 pairs of coordinates.

The indices IDX correspond in this example to the bits [11:6] of the respective physical addresses provided by the incoming individual invalidation commands. If fewer than four invalidation commands are to be processed, the masks W associated with the missing commands may be set to 0, indicating that they will be ignored.

As for the values of the W fields identifying the ways, the directories DIR are configured to further record the ways in which the lines are stored in the caches, and also to broadcast these ways in the invalidation commands. These ways broadcast in the invalidation commands are then copied in the W fields of the ARRAY_OF_SLOTS consolidated invalidation command.

At the level of the directories DIR, ideally each cache line is recorded with the cores that possess it and, for each core, the way in which it is located. This may represent a significant number of bits to manipulate for each line in a system with a large number of cores. For example, for 16 cores with 8-way caches, 16 3-bit fields would be needed, i.e. 48 bits, to encode one way among 8 for each of the 16 cores.

Figure 2B illustrates an embodiment of a directory record reducing complexity and hardware cost, with the trade-off of a reduced accuracy of the way identification. In each directory, a core mask CORE[15:0] with a bit for each core and a way mask W[7:0] with a bit for each way are managed for each recorded cache line @PHY[39:6]. This reduces the number of bits to 24 for a system of 16 cores with 8-way caches. It is then the way mask W of this record that is transmitted in the corresponding invalidation command.

With such way masks, if several cores use the same cache line but that line is stored in a different way in each core, the way mask for that cache line would have several bits set to 1.

The cache controller is configured to process such a consolidated command by reading each pair of coordinates (IDX, W) and, for each pair, invalidating the cache lines located at the intersection of the set identified by IDX and the ways marked in W. If the way mask W contains more than one bit set to 1, additional cache lines, if they exist in the cache, will be unnecessarily invalidated, but this is the price to pay for simplifying the structure of the directories. In practice, situations where more than one way is marked in a way mask are infrequent.

The invalidation of a cache line by the cache controller may be conventionally performed by toggling a validity flag in a matrix of flip-flops representing the intersections of the sets and ways of the cache. Each of these flip-flops is individually accessible by the logic circuits of the controller, so that these circuits may be configured to toggle any number of flags simultaneously. Once a flag is thus set to the "invalid" state, a subsequent read access by the core to that location fails after checking the flag ("cache miss") and is routed to shared memory to reload an updated cache line.

The binary identifier "11" corresponds to the MASK_OF_SETS type. This consolidated command is produced when the number of invalidations to be processed exceeds the number of commands that a consolidated ARRAY _OF _SLOTS command can handle, namely 4 in the present example. The IData field is then a mask of sets S-MASK[63:0] where each bit at 1 indicates that the set corresponding to the position of the bit in the mask is to be invalidated. Thus, the size of the IData field is at least equal to the number of sets in the cache, 64 in the present example.

To generate the S-MASK, the index fields of the physical addresses of the pending invalidation commands are used, namely the values @PHY[11:6]. The values @PHY[11:6] determine the positions of the bits to be set to 1 in the S-MASK. This S-MASK may then be exploited by the cache controller to simultaneously invalidate all the sets marked in this mask.

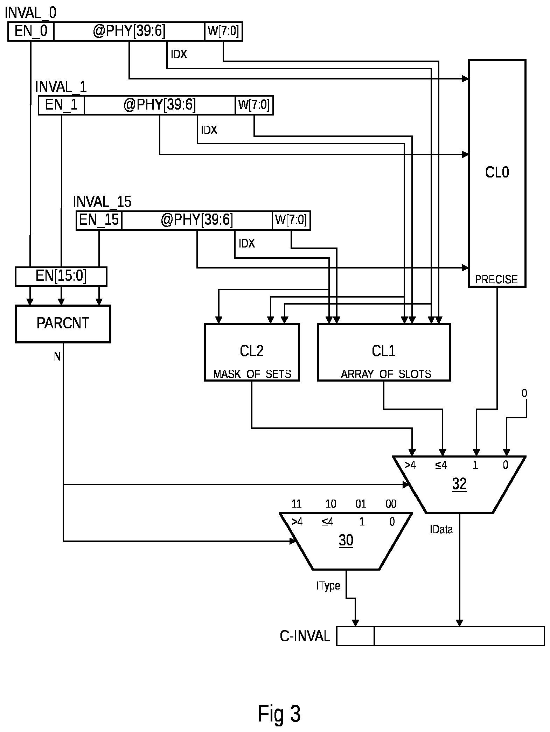

Figure 3 is a block diagram of a logic circuit configured to generate the consolidated commands, in particular the content of the IData field of each type of consolidated command. Such a circuit may be integrated into each master side, at the level of the block CONSLD of Figure 1. The circuit operates on all point-to-point connections between the master side and the directories of the memory banks.

From each of the memory banks, 16 in this example, the circuit receives a bundle of conductors INVAL_i used to transmit an invalidation command. One conductor carries a flag EN_i indicating the presence of an invalidation command, the following conductors convey the address of the cache line to be invalidated @PHY[39:6], and the last conductors convey the way mask W[7:0]. The flags EN_i are provided to individual inputs of a parallel counter PARCNT that provides the number of active commands N at any given time. The concatenation of these flags forms a 16-bit mask of active commands EN[15:0]. The count N controls two 4-way multiplexers 30, 32 which produce respectively the IType and IData parameters of the consolidated invalidation command C-INVAL.

When N = 0, multiplexer 30 selects the binary value "00" for IType, and multiplexer 32 selects the value 0 for IData.

When N = 1, multiplexer 30 selects the binary value "01" for IType, and multiplexer 32 selects the output of a combinatorial logic circuit CL0 for IData.

Circuit CL0 receives all cache line addresses @PHY[39:6] and transmits the one for which the EN_i flag is active.

When 1 < N ≤ 4, multiplexer 30 selects the binary value "10" for IType, and multiplexer 32 selects the output of a combinatorial logic circuit CL1 for IData.

Circuit CL1 receives all index values IDX contained in the least significant bits of the cache line addresses, namely bits @PHY[11:6] in this example, and also receives the way masks W. The circuit forms pairs of values (index IDX, way mask W) for only the values that have an active EN_i flag, and positions them in 56 bits used to form the IData field.

When N > 4, multiplexer 30 selects the binary value "11" for IType, and multiplexer 32 selects the output of a combinatorial logic circuit CL2 for IData.

Circuit CL2 receives all index values IDX contained in the cache line addresses, namely bits @PHY[11:6] in this example. The circuit forms a 64-bit mask by setting to 1 all bits at positions determined by the indices whose EN_i flag is active.

According to an alternative for the PRECISE consolidated invalidation command, provided the directories store and transmit the way information W, circuit CL0 may be designed simply to extract the (IDX, W) pair from the single invalidation command received, actually forming a special case of an ARRAY_OF_SLOTS command. This saves one clock cycle required to consult the cache tag memory, at the risk of invalidating "for nothing" an evicted cache line or additional cache lines if the W mask marks several ways. Such an alternative is in fact implemented by omitting circuit CL0 and using circuit CL1 for counts N between 1 and 4.

## Claims

1. A method for managing cache coherence in a multicore processor system, wherein each core (10) has a respective cache (L1) and accesses multiple banks (12) of a memory shared between the cores, the method comprising the steps of:
managing a directory (DIR) in each memory bank for implementing a directory-based cache coherence;
writing to a current memory address by a core;
searching the directory assigned to the current memory address for cores that possess a cache line matching the current memory address;
sending respective cache line invalidation commands (INVAL) to the cores returned by the directory, the commands including the memory address of the cache line; and
for each core, serving multiple invalidation commands received from different memory banks;
**characterized in that** the step of serving multiple invalidation commands comprises the steps of:
counting the number (N) of invalidation commands received since a last clock cycle;
when the count of invalidation commands received is one, transmitting the received invalidation command (PRECISE) to the cache; and
when the count of invalidation commands received is greater than one, transmitting to the cache a single command (C-INVAL) consolidating the cache lines identified in the received invalidation commands, in a format usable by the cache to simultaneously invalidate the identified cache lines.

2. The method according to claim 1, wherein each core has a respective set-associative multi-way cache, the method further comprising the steps of:
recording in the directories (DIR) the ways (W) in which the caches store the cache lines;
transmitting the ways in the invalidation commands sent to the cores; and
including in the consolidated invalidation command, for each received invalidation command, a pair of coordinates including a set index (IDX), extracted from the memory address, and the way (W).

3. The method according to claim 2, comprising the step of responding to the consolidated invalidation command by the cache by simultaneously invalidating each cache line located at the intersection of the set and way determined by a respective pair of coordinates.

4. The method according to claim 2, wherein the step of serving multiple invalidation commands comprises the steps of:
forming a bit mask (MASK_OF_SETS) comprising bits set to 1 at the positions identified by set indices (IDX) extracted from the memory addresses of the received invalidation commands;
when the count of invalidation commands received is greater than a threshold, including the bit mask in the consolidated invalidation command; and
responding to the consolidated command by the cache by simultaneously invalidating the cache sets marked in the bit mask.

5. The method according to claim 2, wherein the directory records the cores and ways for each cache line in the form of a compound bit mask marking the cores having the line in their cache and the ways in which the line is present in the caches of those cores, and the way information transmitted in the invalidation commands includes the bits of the compound bit mask identifying the ways.

6. The method according to claim 2, wherein the consolidated invalidation commands are configured to convey a field comprising a fixed number of bits, among which:
a first part (IType) identifies a command type among an original invalidation command, a consolidated command with coordinates, and a consolidated command with a bit mask, and
a second part (IData) defines for the respective types: the address of the cache line, the pairs of coordinates, and the bit mask.

7. A processor comprising:
multiple cores (10), each including a local cache (L1);
multiple memory banks (12) forming a shared memory for the multiple cores;
a directory-based cache coherence protocol manager (DIR), comprising for each core a consolidation circuit (16) for consolidating multiple cache line invalidation commands (INVAL) received from the different memory banks, **characterized in that** the consolidation circuit comprises :
a counter for counting the received invalidation commands (PARCNT); and
a selection circuit (32) configured to, depending on whether the count (N) of received invalidation commands is equal to 1 or greater, transmit to the cache the single received invalidation command or a consolidated invalidation command for the cache lines identified in the received invalidation commands, in a format usable by the cache to simultaneously invalidate the identified cache lines.

8. The processor according to claim 7, wherein each core has a respective set-associative multi-way cache, the processor further comprising:
a directory (DIR) associated with each memory bank, configured to record with each cache line, the ways in which the cache line is present in the different cores and to include the ways (W) in the invalidation commands sent to the cores; and
the consolidation circuit configured to include in the consolidated invalidation command, for each received cache line invalidation command, a pair of coordinates including a set index (IDX), extracted from a memory address of the cache line, and the way (W).

9. The processor according to claim 8, wherein the consolidation circuit is configured to include in the consolidated invalidation command, when the count of received invalidation commands is greater than a threshold, a bit mask marking cache sets to invalidate, wherein each set includes the cache line identified by a respective received invalidation command.

10. A method for managing cache coherence in a multicore processor system, wherein each core (10) has a respective set-associative multi-way cache (L1), and accesses multiple banks (12) of a memory shared between the cores, the method comprising the steps of:
managing a directory (DIR) in each memory bank for implementing a directory-based cache coherence;
writing to a current memory address by a core;
searching the directory assigned to the current memory address for the cores that possess a cache line matching the current memory address;
sending respective cache line invalidation commands (INVAL) to the cores returned by the directory, the commands including the memory address of the cache line;
for each core, serving multiple invalidation commands received from different memory banks; the method being **characterized in that** it comprises
recording in the directories (DIR) the ways (W) in which the caches store the cache lines;
transmitting the ways in the invalidation commands sent to the cores;
serving the multiple invalidation commands received by a core by transmitting to the core's cache a single consolidated command (C-INVAL) including, for each received invalidation command, a pair of coordinates including a set index (IDX), extracted from the memory address of the cache line, and the way (W); and
responding by a cache to a consolidated invalidation command by simultaneously invalidating each cache line located at the intersection of the set and way determined by a respective pair of coordinates.

11. The method according to claim 10, wherein the step of serving multiple invalidation commands comprises the steps of:
counting the number (N) of invalidation commands received since a last clock cycle;
forming a bit mask (MASK_OF_SETS) comprising bits set to 1 at the positions identified by the set indices (IDX);
when the count of received invalidation commands is greater than a threshold, including the bit mask in the consolidated invalidation command in place of the pairs of coordinates; and
responding by the cache to the consolidated command by simultaneously invalidating the cache sets marked in the bit mask.

## Patentansprüche

1. Verfahren zum Verwalten der Cache-Kohärenz in einem Mehrkernprozessorsystem, wobei jeder Kern (10) einen jeweiligen Cache (L1) aufweist und auf mehrere Bänke (12) eines den Kernen gemeinsamen Speichers zugreift, wobei das Verfahren die Schritte umfasst:
Verwalten eines Verzeichnisses (DIR) in jeder Speicherbank, um eine verzeichnisbasierte Cache-Kohärenz zu implementieren;
Schreiben, durch einen Kern, auf eine aktuelle Speicheradresse;
Durchsuchen des der aktuellen Speicheradresse zugeordneten Verzeichnisses nach Kernen, die über eine Cache-Zeile verfügen, die der aktuellen Speicheradresse entspricht;
Senden entsprechender Befehle zur Cache-Zeilen-Invalidierung (INVAL) an die durch das Verzeichnis zurückgegebenen Kerne, wobei die Befehle die Speicheradresse der Cache-Zeile einschließen; und
Ausführen, für jeden Kern, der mehreren von unterschiedlichen Speicherbänken empfangenen Invalidierungsbefehle;
**dadurch gekennzeichnet, dass**
der Schritt des Ausführens mehrerer Invalidierungsbefehle die Schritte umfasst:
Zählen der Anzahl (N) der Invalidierungsbefehle, die seit einem letzten Taktzyklus empfangen wurden;
wenn die Anzahl der empfangenen Invalidierungsbefehle eins ist, Übertragen des empfangenen Invalidierungsbefehls (PRECISE) zu dem Cache; und
wenn die Anzahl der empfangenen Invalidierungsbefehle größer als eins ist, Übertragen eines einzigen Befehls (C-INVAL) zu dem Cache, der die in den empfangenen Invalidierungsbefehlen identifizierten Cache-Zeilen konsolidiert, in einem Format, das durch den Cache verwendbar ist, um die identifizierten Cache-Zeilen gleichzeitig zu invalidieren.

2. Verfahren nach Anspruch 1, wobei jeder Kern einen jeweiligen satzassoziativen Mehrwege-Cache aufweist, wobei das Verfahren ferner die Schritte umfasst:
Aufzeichnen, in den Verzeichnissen (DIR), der Wege (W), in denen die Caches die Cache-Zeilen speichern;
Übertragen der Wege in den an die Kerne gesendeten Invalidierungsbefehlen; und
Einschließen, für jeden empfangenen Invalidierungsbefehl, eines Paares Koordinaten, das einen aus der Speicheradresse extrahierten Satzindex (IDX) und den Weg (W) einschließt, in den konsolidierten Invalidierungsbefehl.

3. Verfahren nach Anspruch 2, umfassend den Schritt des Reagierens, durch den Cache, auf den konsolidierten Invalidierungsbefehl, indem er jede Cache-Zeile, die sich in der Schnittmenge des Satzes und des Weges befindet, die durch ein jeweiliges Paar Koordinaten bestimmt sind, gleichzeitig invalidiert.

4. Verfahren nach Anspruch 2, wobei der Schritt des Ausführens mehrerer Invalidierungsbefehle die Schritte umfasst:
Bilden einer Bitmaske (MASK_OF_SETS), die Bits umfasst, die an den Positionen auf 1 gesetzt sind, die durch Satzindizes (IDX) identifiziert worden sind, die aus den Speicheradressen der empfangenen Invalidierungsbefehle extrahiert wurden;
wenn die Anzahl der empfangenen Invalidierungsbefehle größer als ein Schwellenwert ist, Einschließen der Bitmaske in den konsolidierten Invalidierungsbefehl; und
Reagieren, durch den Cache, auf den konsolidierten Befehl, indem er die in der Bitmaske markierten Cache-Sätze gleichzeitig invalidiert.

5. Verfahren nach Anspruch 2, wobei das Verzeichnis die Kerne und Wege für jede Cache-Zeile in Form einer zusammengesetzten Bitmaske aufzeichnet, die die Kerne, die die Zeile in ihrem Cache aufweisen, und die Wege markiert, in denen die Zeile in den Caches dieser Kerne vorhanden ist, und die in den Invalidierungsbefehlen übermittelten Informationen über die Wege die Bits der zusammengesetzten Bitmaske einschließen, die die Wege identifizieren.

6. Verfahren nach Anspruch 2, wobei die konsolidierten Invalidierungsbefehle konfiguriert sind, um ein Feld zu transportieren, das eine feste Anzahl von Bits umfasst, wovon
ein erster Teil (IType) einen Befehlstyp unter einem ursprünglichen Invalidierungsbefehl, einem konsolidierten Befehl mit Koordinaten und einem konsolidierten Befehl mit einer Bitmaske identifiziert und
ein zweiter Teil (IData) für die jeweiligen Typen die Adresse der Cache-Zeile, die Koordinatenpaare und die Bitmaske definiert.

7. Prozessor, umfassend:
mehrere Kerne (10), die jeweils einen lokalen Cache (L1) einschließen;
mehrere Speicherbänke (12), die einen gemeinsam genutzten Speicher für die mehreren Kerne bilden;
einen verzeichnisbasierten Cache-Kohärenz-Protokollverwalter (DIR), der für jeden
Kern eine Konsolidierungsschaltung (16) zum Konsolidieren mehrerer Befehle zur Cache-Zeilen-Invalidierung (INVAL) umfasst, die von den unterschiedlichen Speicherbänken empfangen werden,
**dadurch gekennzeichnet, dass** die Konsolidierungsschaltung umfasst:
einen Zähler zum Zählen der empfangenen Invalidierungsbefehle (PARCNT) und eine Auswahlschaltung (32), die konfiguriert ist, um in Abhängigkeit davon, ob die Anzahl (N) der empfangenen Invalidierungsbefehle gleich 1 oder größer ist, den einzigen empfangenen Invalidierungsbefehl oder einen konsolidierten Invalidierungsbefehl für die in den empfangenen Invalidierungsbefehlen identifizierten Cache-Zeilen in einem Format zu dem Cache zu übertragen, das durch den Cache verwendbar ist, um die identifizierten Cache-Zeilen gleichzeitig zu invalidieren.

8. Prozessor nach Anspruch 7, wobei jeder Kern einen jeweiligen satzassoziativen Mehrwege-Cache aufweist, wobei der Prozessor ferner umfasst:
ein Verzeichnis (DIR), dem jede Speicherbank zugeordnet ist, das konfiguriert ist, um mit jeder Cache-Zeile die Wege aufzuzeichnen, in denen die Cache-Zeile in den unterschiedlichen Kernen vorhanden ist, und um die Wege (W) in den an die Kerne gesendeten Invalidierungsbefehlen einzuschließen; und die Konsolidierungsschaltung, die konfiguriert ist, um für jeden empfangenen Befehl zur Cache-Zeilen-Invalidierung in den konsolidierten Invalidierungsbefehl ein Paar Koordinaten einzuschließen, das einen aus einer Speicheradresse der Cache-Zeile extrahierten Satzindex (IDX) und den Weg (W) einschließt.

9. Prozessor nach Anspruch 8, wobei die Konsolidierungsschaltung konfiguriert ist, um dann, wenn die Anzahl der empfangenen Invalidierungsbefehle größer als ein Schwellenwert ist, in den konsolidierten Invalidierungsbefehl eine Bitmaske einzuschließen, die zu invalidierende Cache-Sätze markiert, wobei jeder Satz die Cache-Zeile einschließt, die durch einen jeweiligen empfangenen Invalidierungsbefehl identifiziert wurde.

10. Verfahren zum Verwalten der Cache-Kohärenz in einem Mehrkernprozessorsystem, wobei jeder Kern (10) einen jeweiligen satzassoziativen Mehrwege-Cache (L1) aufweist und auf mehrere Bänke (12) eines den Kernen gemeinsam genutzten Speichers zugreift, wobei das Verfahren die Schritte umfasst:
Verwalten eines Verzeichnisses (DIR) in jeder Speicherbank, um eine verzeichnisbasierte Cache-Kohärenz zu implementieren;
Schreiben, durch einen Kern, auf eine aktuelle Speicheradresse;
Durchsuchen des der aktuellen Speicheradresse zugeordneten Verzeichnisses nach den Kernen, die über eine Cache-Zeile verfügen, die der aktuellen Speicheradresse entspricht;
Senden entsprechender Befehle zur Cache-Zeilen-Invalidierung (INVAL) an die durch das Verzeichnis zurückgegebenen Kerne, wobei die Befehle die Speicheradresse der Cache-Zeile einschließen;
Ausführen, für jeden Kern, der mehreren von unterschiedlichen Speicherbänken empfangenen Invalidierungsbefehle; wobei das Verfahren **dadurch gekennzeichnet ist, dass** es umfasst: Aufzeichnen, in den Verzeichnissen (DIR), der Wege (W), in denen die Caches die Cache-Zeilen speichern;
Übertragen der Wege in den an die Kerne gesendeten Invalidierungsbefehlen;
Ausführen der mehreren durch einen Kern empfangenen Invalidierungsbefehle durch Übertragen eines einzigen konsolidierten Befehls (C-INVAL), der für jeden empfangenen Invalidierungsbefehl ein Paar Koordinaten einschließt, die einen aus der Speicheradresse der Cache-Zeile extrahierten Satzindex (IDX) und den Weg (W) einschließen, zu dem Cache des Kerns; und
Reagieren, durch einen Cache, auf einen konsolidierten Invalidierungsbefehl, indem er jede Cache-Zeile, die sich in der Schnittmenge des Satzes und des Weges befindet, die durch ein jeweiliges Paar Koordinaten bestimmt sind, gleichzeitig invalidiert.

11. Verfahren nach Anspruch 10, wobei der Schritt des Ausführens mehrerer Invalidierungsbefehle die Schritte umfasst:
Zählen der Anzahl (N) der Invalidierungsbefehle, die seit einem letzten Taktzyklus empfangen wurden;
Bilden einer Bitmaske (MASK_OF_SETS), die Bits umfasst, die an den durch die Satzindizes (IDX) identifizierten Positionen auf 1 gesetzt sind;
wenn die Anzahl der empfangenen Invalidierungsbefehle größer als ein Schwellenwert ist, Einschließen der Bitmaske anstelle der Koordinatenpaare in den konsolidierten Invalidierungsbefehl; und
Reagieren, durch den Cache, auf den konsolidierten Befehl, indem er die in der Bitmaske markierten Cache-Sätze gleichzeitig invalidiert.

## Revendications

1. Procédé de gestion de la cohérence de cache dans un système de processeur multicœur, où chaque cœur (10) dispose d'un cache respectif (L1) et a accès à plusieurs banques (12) d'une mémoire partagée entre les cœurs, le procédé comprenant les étapes suivantes :
gérer un répertoire (DIR) dans chaque banque mémoire pour la mise en œuvre d'une cohérence de cache basée sur des répertoires ;
accéder en écriture à une adresse mémoire courante par un cœur ;
rechercher dans le répertoire gérant l'adresse courante les cœurs qui possèdent une ligne de cache correspondant à l'adresse courante ;
envoyer aux cœurs identifiés par le répertoire des commandes respectives d'invalidation (INVAL) de la ligne de cache, les commandes incluant l'adresse mémoire de la ligne de cache ; et
pour chaque cœur, servir de multiples commandes d'invalidation reçues de différentes banques mémoire ;
**caractérisé en ce que** l'étape de service des multiples commandes d'invalidation comprend les étapes suivantes :
compter le nombre (N) de commandes d'invalidation reçues depuis un dernier cycle d'horloge ;
lorsque le compte de commandes d'invalidation reçues vaut un, transmettre au cache la commande d'invalidation (PRECISE) reçue ; et
lorsque le compte de commandes d'invalidation reçues est supérieur à un, transmettre au cache une seule commande (C-INVAL) consolidant les lignes de cache identifiées dans les commandes d'invalidation reçues, dans un format exploitable par le cache pour invalider simultanément les lignes de cache identifiées.

2. Procédé selon la revendication 1, dans lequel chaque cœur dispose d'un cache respectif associatif par ensembles à multiples voies, le procédé comprenant en outre les étapes suivantes :
enregistrer dans les répertoires (DIR) les voies (W) dans lesquelles les caches stockent les lignes de cache ;
transmettre les voies dans les commandes d'invalidation envoyées aux cœurs ; et
inclure dans la commande d'invalidation consolidée, pour chaque commande d'invalidation reçue, un couple de coordonnées incluant un index d'ensemble (IDX), extrait de l'adresse mémoire, et la voie (W).

3. Procédé selon la revendication 2, comprenant l'étape de répondre par le cache à la commande d'invalidation consolidée en invalidant simultanément chaque ligne de cache se trouvant à l'intersection de l'ensemble et de la voie déterminés par un couple respectif de coordonnées.

4. Procédé selon la revendication 2, dans lequel l'étape de service des multiples commandes d'invalidation comprend les étapes suivantes :
former un masque de bits (MASK _OF_SETS) comprenant un bit à 1 aux positions identifiées par des index d'ensembles (IDX) extraits des adresses mémoire des commandes d'invalidation reçues ;
lorsque le compte de commandes d'invalidation reçues est supérieur à un seuil, inclure le masque de bits dans la commande d'invalidation consolidée ; et
répondre par le cache à la commande consolidée en invalidant simultanément les ensembles de cache marqués dans le masque de bits.

5. Procédé selon la revendication 2, dans lequel le répertoire enregistre les cœurs et les voies pour chaque ligne de cache sous la forme d'un masque de bits combiné marquant les cœurs ayant la ligne dans leur cache et les voies dans lesquelles la ligne est présente dans les caches de ces cœurs, et l'information de voie transmise dans les commandes d'invalidation inclut les bits du masque de bits identifiant les voies.

6. Procédé selon la revendication 2, dans lequel les commandes d'invalidation consolidées sont configurées pour véhiculer un champ comprenant un nombre fixe de bits dont :
une première partie (IType) identifie un type de commande parmi une commande d'invalidation originale, une commande consolidée avec coordonnées, et une commande consolidée avec masque de bits, et
une deuxième partie (IData) définit pour les types respectifs : l'adresse de la ligne de cache, les couples de coordonnées, et le masque de bits.

7. Processeur comprenant :
de multiples cœurs (10) comprenant chacun un cache local (L1) ;
de multiples banques mémoire (12) formant une mémoire partagée par les multiples cœurs ;
un gestionnaire de protocole de cohérence de cache basé sur des répertoires (DIR), comprenant pour chaque cœur un circuit (16) de consolidation de multiples commandes d'invalidation de ligne de cache (INVAL) reçues des différentes banques mémoire, **caractérisé en ce que** le circuit de consolidation comprenant :
un compteur de commandes d'invalidation reçues (PARCNT) ;
un circuit de sélection (32) configuré pour, selon que le compte (N) de commandes d'invalidation reçues est égal à 1 ou est supérieur, transmettre au cache la seule commande d'invalidation reçue ou une commande d'invalidation consolidant les lignes de cache identifiées dans les commandes d'invalidation reçues, dans un format exploitable par le cache pour invalider simultanément les lignes de cache identifiées.

8. Processeur selon la revendication 7, dans lequel chaque cœur dispose d'un cache respectif associatif par ensembles à multiples voies, le processeur comprenant en outre :
un répertoire (DIR) associé à chaque banque, configuré pour enregistrer avec chaque ligne de cache, les voies dans laquelle la ligne de cache est présente dans les différents cœurs et pour inclure les voies (W) dans les commandes d'invalidation envoyées aux cœurs ; et
le circuit de consolidation configuré pour inclure dans la commande d'invalidation consolidée, pour chaque commande d'invalidation de ligne de cache reçue, un couple de coordonnées incluant un index d'ensemble (IDX), extrait d'une adresse mémoire de la ligne de cache, et la voie (W).

9. Processeur selon la revendication 8, dans lequel le circuit de consolidation est configuré pour inclure dans la commande d'invalidation consolidée, lorsque le compte de commandes d'invalidations reçues est supérieur à un seuil, un masque de bits marquant des ensembles de cache à invalider, où chaque ensemble inclut la ligne de cache identifiée par une commande d'invalidation reçue respective.

10. Procédé de gestion de la cohérence de cache dans un système de processeur multicœur, où chaque cœur (10) dispose d'un cache respectif (L1) associatif par ensembles à multiples voies, et a accès à plusieurs banques (12) d'une mémoire partagée entre les cœurs, le procédé comprenant les étapes suivantes :
gérer un répertoire (DIR) dans chaque banque mémoire pour la mise en œuvre d'une cohérence de cache basée sur des répertoires ;
accéder en écriture à une adresse mémoire courante par un cœur ;
rechercher dans le répertoire gérant l'adresse courante les cœurs qui possèdent une ligne de cache correspondant à l'adresse courante ;
envoyer aux cœurs identifiés par le répertoire des commandes respectives d'invalidation (INVAL) de la ligne de cache, les commandes incluant l'adresse mémoire de la ligne de cache ; et
pour chaque cœur, servir de multiples commandes d'invalidation reçues de différentes banques mémoire ;
**caractérisé en ce qu'**il comprend les étapes suivantes :
enregistrer dans les répertoires (DIR) les voies (W) dans lesquelles les caches stockent les lignes de cache ;
transmettre les voies dans les commandes d'invalidation envoyées aux cœurs ; et
servir les multiples commandes d'invalidation reçues par un cœur en transmettant au cache du cœur une seule commande consolidée (C-INVAL) incluant, pour chaque commande d'invalidation reçue, un couple de coordonnées incluant un index d'ensemble (IDX), extrait de l'adresse mémoire de la ligne de cache, et la voie (W) ; et
répondre par un cache à une commande d'invalidation consolidée en invalidant simultanément chaque ligne de cache se trouvant à l'intersection de l'ensemble et de la voie déterminés par un couple respectif de coordonnées.

11. Procédé selon la revendication 10, dans lequel l'étape de service des multiples commandes d'invalidation comprend les étapes suivantes :
compter le nombre (N) de commandes d'invalidation reçues depuis un dernier cycle d'horloge ;
former un masque de bits (MASK _OF_SETS) comprenant un bit à 1 aux positions identifiées par les index d'ensemble (IDX) ;
lorsque le compte de commandes d'invalidation reçues est supérieur à un seuil, inclure le masque de bits dans la commande d'invalidation consolidée à la place des couples de coordonnées ; et
répondre par le cache à la commande consolidée en invalidant simultanément les ensembles de cache marqués dans le masque de bits.
